# EUROPEAN PATENT APPLICATION

(11) **EP 2 099 199 A1**
(43) Date of publication of application: **09.09.2009**
(21) Application number: 08004189.0
(22) Date of filing: 06.03.2008
(51) Int. Cl.: H04L 29/08

(54) **Plug-and-play coupling of sensors to an embedded device**

(71) Applicant: Fifthplay NV, 9100 Sint-Niklaas (BE)
(72) Inventor: Baekelmans, John, 2550 Kontich (BE); Vos, Thibaut, 2650 Edegem (BE); De Witte, Wim, 9100 Sint-Niklaas (BE); Vitale Mario, 2650 Edegem (BE)
(74) Representative: Plas, Axel Ivo Michel

(57) **Abstract**

An embedded device for use in a service aggregating system comprising means for plug-and-play coupling sensors or actuators with the embedded device and configuration of the sensors or actuators whereby the end-user is shielded from any configuration step.

## Description

### Field of the Invention

The present invention generally relates to service delivery, i.e. technology enabling end-customers to consume at home services from so called service providers or service partners. More particularly, the invention concerns aggregating services from multiple service providers enabling delivery of services to a large amount of end-customers, in a many-to-many relationship and in a consistent, uniform fashion, and the invention relates in particular to the coupling of sensors and actuators with an embedded device, where the embedded device configures the sensor or actuator to communicate with the embedded device in a secure and reliable way.

### Background of the Invention

End-customers today typically consume multiple services delivered by multiple service providers. There is a need for aggregating the services across service provider domains, such that end-customers can seamlessly discover, enable, configure, update and/or disable such services through plug & play and without having to install and maintain dedicated user terminals for each and every service. This need has been recognised for instance in US Patent Application US 2005/0033808 entitled "Application Service Peering and Aggregation", for instance in paragraph [0005] thereof. The architecture disclosed in the latter US patent application however relies on a dedicated server, named SPAS, that proxies the application servers whereto the events are routed. Through the proxies, service applications within or between service providers may become integrated, aggregated or bundled. Proxying the service applications however involves duplication of the application service logic or parts thereof, and consequently has a negative impact on maintenance, memory and processing requirements in the network.

Instead of a traditional client-server architecture, with or without proxying the service applications, European Patent Application 07118058.2 from the same applicant Fifthplay nv and incorporated herein by reference, introduces a client-back-end-server architecture whereby the aggregating back-end server acts on every transaction between the end-customer and service provider or vice versa. Service providers can register their services with the service aggregator and end-customers can subscribe to new services with the service aggregator. At the customer end, embedded devices are used to connect with the back-end server of the service aggregator. These embedded devices are non-service-specific computing devices with universal connectivity, typically embedded in a modem, set-top-box or stand-alone box. The service providers or service partners connect to the back-end server of the service aggregator through secure links. Thanks to this architecture, every customer-provider transaction passes through the service aggregator's back-end infrastructure. As a consequence, the service aggregator offers to the end-customers a uniform platform for enabling, configuring, upgrading, disabling services from multiple service providers. In addition, the service aggregator can create added value for the end-customer by enabling dynamic switching between service providers, offering a uniform billing for services, enabling the end-customer to maintain a profile, etc. Towards the service providers, the service aggregator creates added value in reducing the access threshold for potential customers by removing the necessity to acquire and install dedicated service-specific user terminals, and in providing access to a base of potential subscribers to new services.

The aggregating back-end server has a customer portal, aggregator portal and service partner portal. Whereas the customer portal enables the user to configure his profile, the aggregator portal is an administrator portal foreseen to enable the service aggregator to activate/de-activate new services, to activate/de-activate embedded devices, to maintain status and statistics, etc. Further, a service partner portal is hosted by the back-end in order to enable a service partner that has subscribed with the service aggregator to configure his services, and to access certain statistics like amounts of transactions, and statistics related to the users of his services.

Obviously, the services that can be supported through a service aggregation platform with such architecture are manifold. Security and safety related services, reservation services, telecom related services, telemedicine services, shopping, entertainment, etc. can all run through a single platform that does not require complex user terminals like a PC or a service specific terminal, but simply relies on remotely chargeable and controllable always-on embedded devices with universal connectivity (USB, Bluetooth, WiFi, UMTS, Wireless USB, HDMi, etc.). The platform enables to dynamically switch between service providers. The end-user only needs a web browser, e.g. via his TV set, to log into the customer portal of the service aggregator's back-end infrastructure, or - in case of patients, kids, elderly people, ... - the end-user may rely on an assistant, care-giver, parent, etc. in order to configure the services he desires to use through the platform.

The plug-and-play concept is known from PC operating systems like Windows XP and SUSE Linux, but has never been implemented or suggested in an embedded device or black-box environment like for instance the embedded devices used in the service aggregation platform described here above.

### Summary of the Invention

The present invention concerns an embedded device for use in a service aggregating system, the embedded device comprising means for plug-and-play coupling of at least one sensor or actuator with the embedded device and configuration of the at least one sensor or actuator whereby the end-user is shielded from any configuration step.

The present invention further applies to such an embedded device wherein the means for plug-and-play coupling comprise means for creating a secure connection between the at least one sensor or actuator on the one end and the embedded device on the other end.

The present invention further concerns an embedded device that is one or more of:
- a gateway;
- a router;
- a modem;
- a set-top box; and
- a stand-alone box.

The present invention further concerns an embedded device whereby the at least one sensor or actuator comprise one or more of:
- a WiFi USB stick;
- a Bluetooth USB stick;
- a wireless Internet Protocol or IP camera;
- a wired Internet Protocol or IP camera;
- a barcode scanner; and
- a blood pressure measurement device.

### Brief Description of the Drawings

Fig. 1 illustrates an embedded device with plug-and-play coupling functionality for sensors and actuators according to the present invention;
Fig. 2A, 2B, 2C, 2D, 2E and 2F illustrate the installation process for an embedded device, i.e. the Fifthplay Gateway FG4000 device; and
Fig. 3A, 3B, 3C, 3D and 3E illustrate the activation process for the home monitoring service, i.e. the plug-and-play coupling functionality according to the present invention, on the Fifthplay Gateway FG4000 device illustrated by Fig. 2A to Fig. 2F.

### Detailed Description of Embodiment(s)

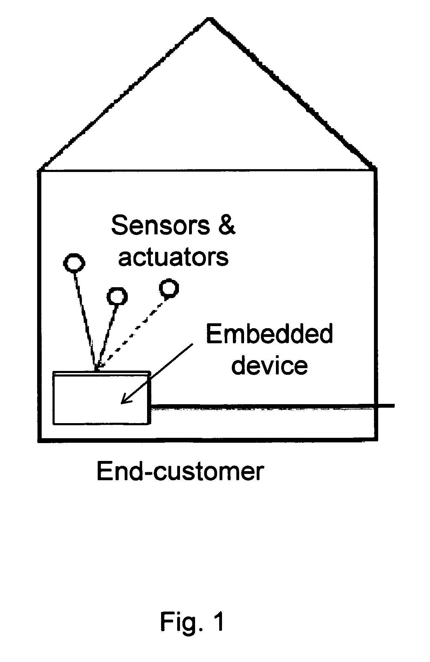

Fig. 1 shows an embedded device, e.g. the Fifthplay Gateway FG400, having plug-and-play coupling intelligence for sensors and actuators.

Examples of such sensors and actuators that are coupled are WiFi and Bluetooth USB sticks, wireless and wired Axis IP cameras, barcode scanners, blood pressure measurement devices, etc.

The embedded devices are non-service-specific computing devices with universal connectivity, typically embedded in a modem, gateway, router, set-top-box or stand-alone box.

The uniqueness in the concept according to the present invention is that the end-user of the equipment is completely shielded from any kind of configuration step. This can typically only be accomplished by creating an open and secure connection between the two communication endpoints. However, the communication path which is configured in the end-points guarantees a secure connection between the two.

The concept is unique because of its cross-vendor approach.

The concept is an integral part of the Fifthplay home monitoring service described below, and possibly of other services which will be put in the market by Fifthplay.

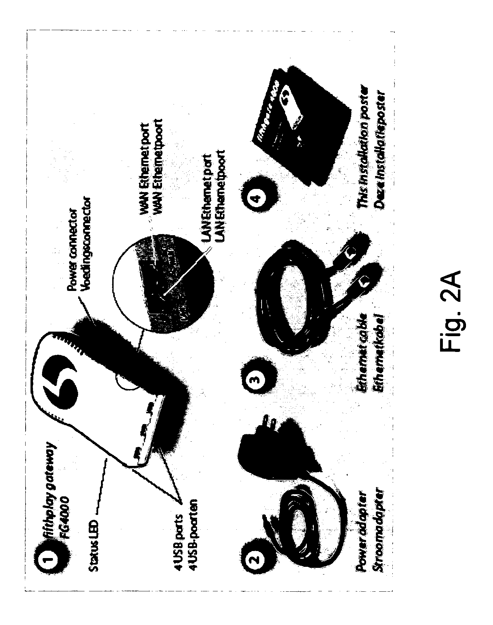

Fig. 2A till 2F illustrate the installation process of the Fifthplay Gateway FG4000.

Fig. 2A shows how to get connected. The Fifthplay Gateway FG4000 is installed together with other components, such as a camera or bar code scanner, enabling the end customer to enjoy a world of easy services. The Fifthplay Gateway FG4000 box comprises the Fifthplay Gateway FG4000 with status LED, power connector, WAN (Wide Area Network) Ethernet port, LAN (Local Area Network) Ethernet port, and 4 USB (Universal Serial Bus) ports. The box further comprises a power adapter, Ethernet cable and installation poster, all shown in Fig. 2A.

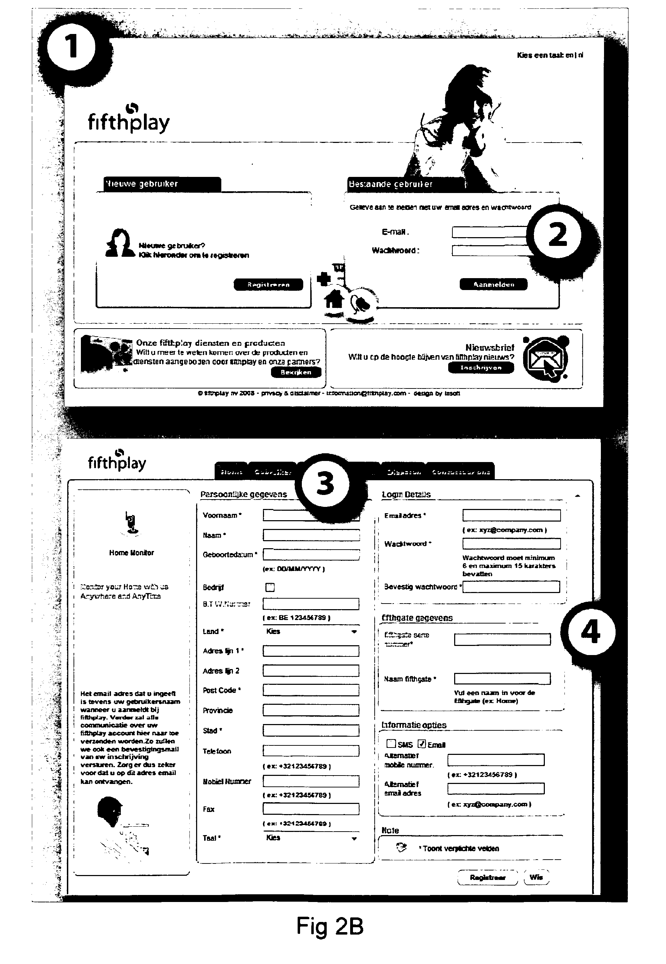

Fig. 2B illustrates the registration step. The end-customer registers itself and the Fifthplay Gateway FG4000 on the Fifthplay portal. This Fifthplay portal is described in detail in the European Patent Application No. 07118058.2 filed on 8 October 2007 by the same applicant, and incorporated herein by reference. This creates a unique link between the client and the Fifthplay Gateway FG4000. For the registration, the end-customer performs the following sub-steps:
1. Browsing to my.fifthplay.com
2. Registering itself as a new user. When already registered, the end-customer logs on with its e-mail address and password and links the Fifthplay Gateway FG4000 to its profile. For more details, reference is made to the support section on the webpage.
3. The end-customer enters all personal data. Data indicated with a "*" on the webpage are mandatory.
4. The end-customer enters the serial number. This serial number can be retrieved on the back of the Fifthplay Gateway FG4000 or at the side of the white box.

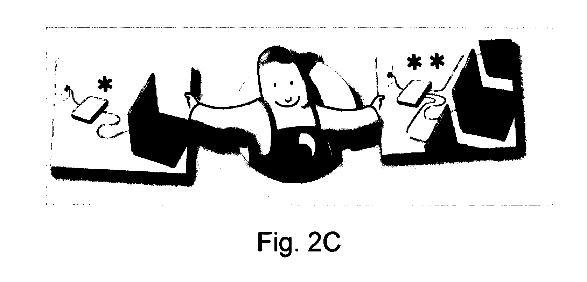

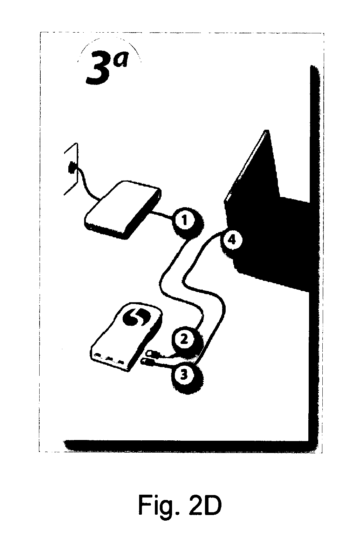

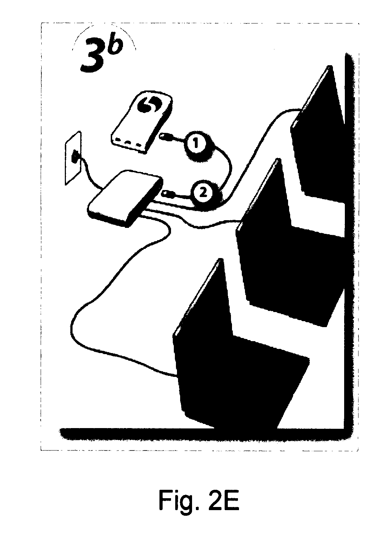

Fig. 2C illustrates verification of the situation. In case of one computer, the next step to execute is illustrated by Fig. 2D. In case of one or several computers and a wired or wireless router, the next step to execute is illustrated by Fig. 2E.

Fig. 2D illustrates the connecting in case of one computer. First, one has to look for the Ethernet cable that connects the modem to the computer and unplug it from the computer. Thereafter, the loose end of the Ethernet cable is plugged in the WAN Ethernet port on the Fifthplay Gateway FG4000. Next, the green Ethernet cable is plugged with one end in the LAN Ethernet port on the Fifthplay Gateway FG4000, and the other end is plugged in the computer.

Fig. 2E illustrates the connecting in case of one or several computers and a wired or wireless router. First, one takes the green Ethernet cable and plugs one end in the WAN Ethernet port on the Fifthplay Gateway FG4000. Thereafter, the other end is plugged in a free Ethernet port on the wired or wireless router.

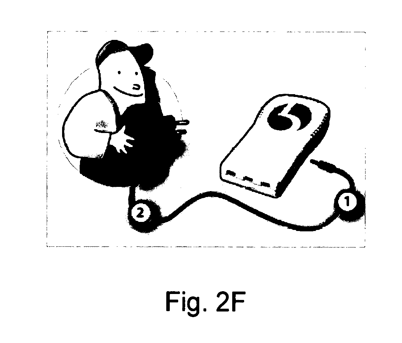

Fig. 2F illustrates the powering up. The power adapter is connected to the Fifthplay Gateway FG4000 and connected to the power outlet The LED status indicator meaning is as follows:
- White LED: powered;
- Blue LED and blinking: starting up, this can take up to one minute;
- Green LED: connected and ready;
- Red LED and blinking fast: the Fifthplay Gateway FG4000 cannot connect to Fifthplay; it is advised to contact www.fifthplay.com/support;
- Yellow LED and blinking: there is no Internet connection; it is advised to contact the Internet service provider; it can take up to one hour before the connection is restored, depending on the Internet service provider.

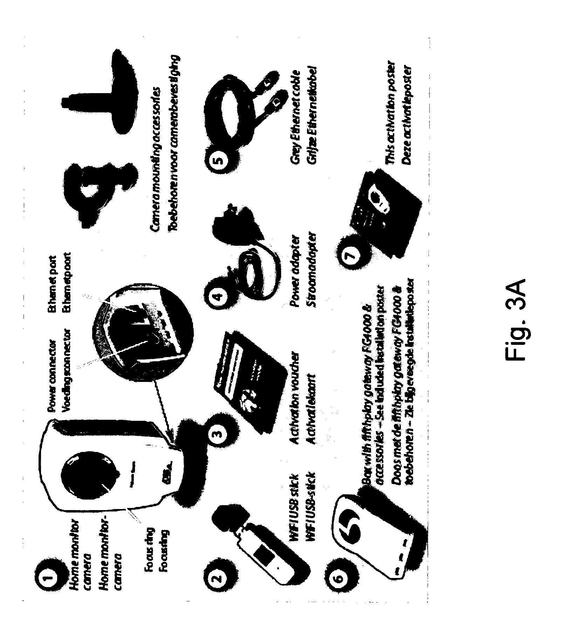

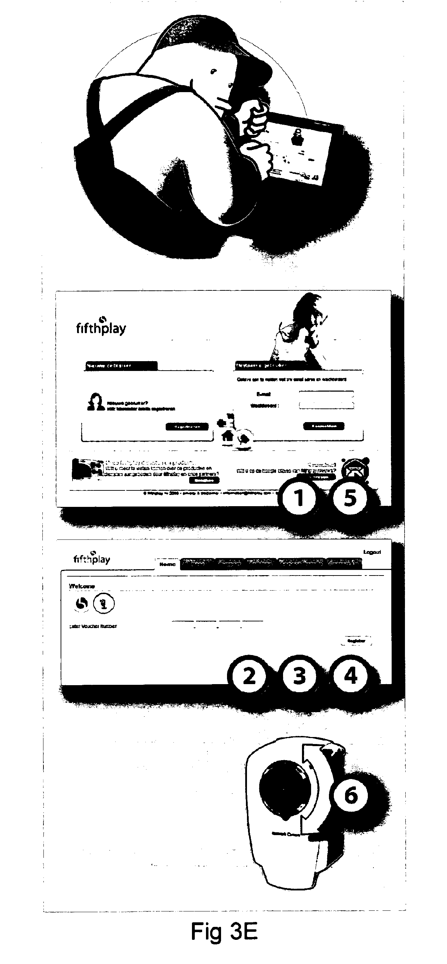

Fig. 3A till Fig. 3E illustrate the activation process of the home monitoring service comprising intelligence for plug-and-play coupling of sensors and actuators to an embedded device, i.e. the Fifthplay Gateway FG4000.

Fig. 3A illustrates the contents of the box. Through the home monitoring service, the user will experience peace of mind by watching hislher home and/or the loved ones anytime, anywhere. The box contains a home monitor camera with focus ring, power connector and Ethernet port, camera mounting accessories, a WiFi USB stick, an activation voucher, a power adapter, a grey Ethernet cable, a box with the Fifthplay Gateway FG4000 and accessories as illustrated by Fig. 2A till Fig. 2F, and an activation poster.

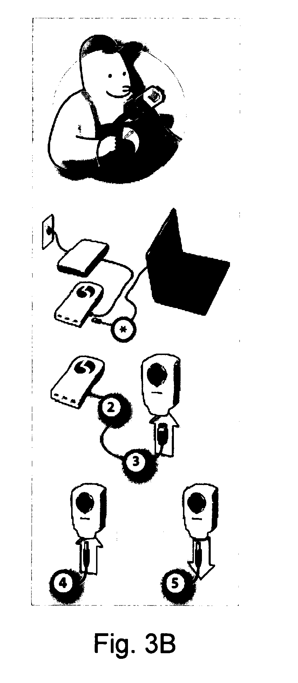

Fig. 3B illustrates the configuring step. First, the Fifthplay Gateway FG4000 and camera are connected to configure the camera and prepare it for use. According to the invention, this is realized through a plug-and-play solution. The Fithplay Gateway FG4000 is installed as explained on the installation poster and as described here above in relation to Fig. 2A till Fig. 2F. Optionally and only in case of one computer in the network, the green Ethernet cable is unplugged from the LAN Ethernet port on the Fifthplay Gateway FG4000. Once the LED on the Fifthplay Gateway FG4000 is green, one moves to the next step which consists in taking the grey Ethernet cable and plugging one end thereof in the LAN Ethernet port on the Fifthplay Gateway FG4000. The other end is plugged into the camera. The power adapter is connected to the camera and to a power outlet and one waits until the Fifthplay Gateway FG4000 beeps. At this point, the camera is configured. The power adapter is now unplugged from the camera.

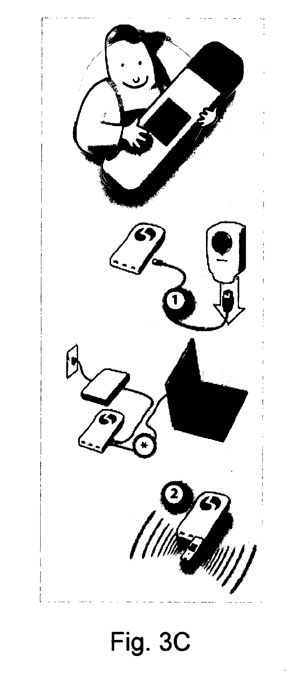

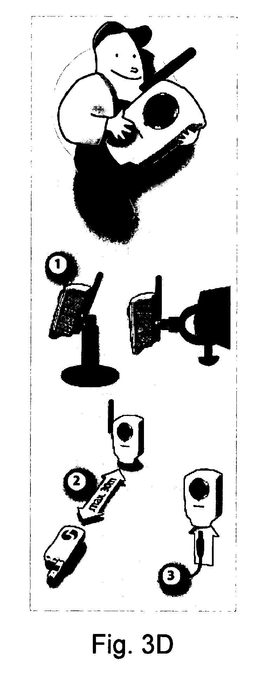

Fig. 3C describes the setting up of WiFi connectivity. In case a wired camera is used this step is not executed and one immediately continues with the positioning step illustrated by Fig. 3D. To setup the connection between a wireless camera and the Fifthplay gateway FG4000, the grey Ethernet cable is unplugged from the LAN Ethernet port on the Fifthplay Gateway FG4000 and from the camera. Optionally and only in case of one computer in the network, the green Ethernet cable is plugged back into the LAN Ethernet port on the Fifthplay Gateway FG4000. Next, the WiFi USB stick is plugged in a free USB port on the Fifthplay Gateway and one waits until the Fifthplay Gateway FG4000 beeps. The wireless network is now up and running.

Fig. 3D illustrates the step of positioning. The mounting foot or the mounting screw are attached to the arm at the back of the camera. The camera is positioned and mounted. In case of a wireless camera, it is advised to position the camera at maximum distance of 30 meters from the Fifthplay Gateway FG4000, and on the same floor level. In case of a wired camera, it is advised to position the camera at a maximum distance of 1,80 meter from the Fifthplay Gateway FG4000. The power adapter is plugged in the camera and one waits until the Fifth play Gateway FG4000 beeps. This can take up to 5 minutes. Thereafter, the connection between the Fifthplay gateway FG4000 and the camera is ready. In case the Fifthplay Gateway FG4000 did not beep, it is advised to position the camera closer. It is noticed that standard WiFi 802.11 b/g specifications are applicable and could influence the quality of the service when wireless WiFi camera(s) is/are used.

Fig. 3E illustrates the activating step. Thereto, the user logs on to my.fifthplay.com with its e-mail address and password, and selects the blinking camera icon. The user enters its home monitor activation code from the activation voucher and follows the instructions on the screen. As a result, the home monitor service becomes activated. Thereafter, the user logs off so that the activation can be processed. To start using the camera, the user logs on again to the Fifthplay portal, clicks on the camera icon again, and selects its camera in the list. As a result, the camera image opens. The user now can turn the black focus ring on the front of its camera until the image is sharp. The setting will depend on the distance between the camera and the object(s) he/she desires to see.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottorn", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An embedded device for use in a service aggregating system,
**CHARACTERIZED IN THAT** said embedded device comprises means for plug-and-play coupling of at least one sensor or actuator with said embedded device and configuration of said at least one sensor or actuator whereby the end-user is shielded from any configuration step.

2. An embedded device according to claim 1,
**CHARACTERIZED IN THAT** said means for plug-and-play coupling comprise means for creating a secure connection between said at least one sensor or actuator on the one end and said embedded device on the other end.

3. An embedded device according to claim 1,
**CHARACTERIZED IN THAT** said embedded device is one or more of:
- a gateway;
- a router;
- a modem;
- a set-top box; and
- a stand-alone box.

4. An embedded device according to claim 1,
**CHARACTERIZED IN THAT** said at least one sensor or actuator comprise one or more of:
- a WiFi USB stick;
- a Bluetooth USB stick;
- a wireless Internet Protocol or IP camera;
- a wired Internet Protocol or IP camera;
- a barcode scanner; and
- a blood pressure measurement device.
